(19) Europäisches Patentamt
European Patent Office
Office européen des brevets

(11) **EP 2 354 104 A1**

(12) **EUROPEAN PATENT APPLICATION**

(43) Date of publication:
**10.08.2011 Bulletin 2011/32**

(51) Int Cl.:
***C03C 13/00*** *(2006.01)*

(21) Application number: **10152818.0**

(22) Date of filing: **05.02.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **3B**
**4651 Battice (BE)**

(72) Inventors:
• **Druart, Hendrik**
**4651 Battice (BE)**

• **Houet, Yves**
**4651 Battice (BE)**
• **Laurent, Dimitri**
**4651 Battice (BE)**
• **Prokhorenko, Oleg**
**Dearborn, MI 48126 (US)**

(74) Representative: **BiiP cvba**
**Culliganlaan 1B**
**1831 Diegem (Bruxelles) (BE)**

(54) **Glass fibre composition and composite material reinforced therewith**

(57) The present invention concerns Glass fibre of quaternary composition comprising $SiO_2$, $Al_2O_3$, CaO, and MgO as major components, characterized by:
• b - a $(MgO + Al_2O_3) \leq (MgO / Al_2O_3) \leq 3.6$, and
• $(MgO + Al_2O_3) < 40\%$,
wherein a = 0.0223 and b = 1.28.
It also concerns composite materials reinforced with such fibres, used in applications such as windmill blades, pressure vessels, components in the automotive, machinery, aerospace applications and such products produced therewith.
Preferably, the glass fibre comprises in percent by weight 45-65 $SiO_2$, 7-25 $Al_2O_3$, 5-20 CaO, and 8-25 MgO as main components.

FIGURE 1

**Description**

**Field of the invention**

The present invention relates to the field of glass fibres, in particular of compositions of glass fibres suitable as reinforcement of high performance fibre reinforced organic or inorganic matrix composite materials. It finally relates to products, such as windmill blades comprising a polymeric shell or skin reinforced with the above glass fibres.

**Background of the invention**

Glass fibre compositions suitable as reinforcement for composite materials have been described for a long time. In 1966, FR1435073 disclosed a composition for a so-called R-glass fibre comprising 50 to 65 wt% $SiO_2$, 20 to 30 wt% $Al_2O_3$, 5 to 20 wt% MgO, and 6 to 16 wt% CaO. These fibres with higher mechanical strength than the more commonly known E-glasses are, however, hindered by rather severe processing conditions, in particular high processing temperatures and more problematic fiberization, which all contribute to their higher cost compared with E-glass.

E-glass is probably the most common type of glass used in continuous fibre reinforced composites. E-glass generally comprises 52 to 56 wt% $SiO_2$, 12 to 16 wt% $Al_2O_3$, 0 to 5 wt% MgO, 16 to 25 wt% CaO, and 5 to 10 wt% $B_2O_3$, and minor amounts of alkaline oxides like $Na_2O$ and $K_2O$. E-glass is usually used as the reference fibre with which the performance of new glass compositions is compared. Boron free E-glass compositions have been proposed, e.g., in US-A-5,789,329 with 59 to 62 wt% $SiO_2$, 12 to 15 wt% $Al_2O_3$, 1 to 4 wt% MgO, 20 to 24 wt% CaO, and minor amounts of alkaline oxides like $Na_2O$ and $K_2O$.

S-glass is a glass generally having higher mechanical strength than E-glasses and comprising about 65 wt% $SiO_2$, 25 wt% $Al_2O_3$, and 10 wt% MgO. As can be seen from the above review, E- and S-glass fibres usually have a low (MgO / $Al_2O_3$) ratio, with high $Al_2O_3$ contents with respect to their MgO contents; R-glass fibres, on the other hand, have higher (MgO / $Al_2O_3$) ratios than the other two fibre types, and also a very high content of (MgO + $Al_2O_3$) of at least 25 wt%.

A multitude of quaternary glass fibre compositions comprising $SiO_2$, $Al_2O_3$, CaO, and MgO as major components, within and around the three main R-, E-, S-glass types revised supra have been proposed in the literature.

In EP1496026 a glass fibre composition is disclosed comprising substantially less boron than traditional E-glass and yet having a considerably lower viscosity than boron free E-glass formulations, thus reducing batch costs. The glass fibres disclosed in this document comprise, 52-62 wt% $SiO_2$, 10-1 5 wt% $Al_2O_3$, 18-25 wt% CaO, 0.5-4 wt% MgO, and 3.5-5.5 wt% $B_2O_3$.

In GB1391384 a glass fibre composition is disclosed comprising no boron and showing acceptable viscosity and liquidus temperature. The glass fibres disclosed in this document comprise, 54-64 wt% $SiO_2$, 9-19 wt% $Al_2O_3$, 9-25 wt% CaO, 0-10 wt% MgO, and various oxides in amounts less than 6 wt%.

W02007/055964 and W02007/055968 propose glass compositions yielding fibres with higher mechanical properties and enhanced resistance to temperature and acids than E-glasses with good forming capability. They are characterized by a content of 60.5-70.5 wt% $SiO_2$, 10-24.5 wt% $Al_2O_3$, and 6-20 wt% of RO (= MgO + CaO + SrO). The glass fibres cited in the examples comprise 4.8-14 wt% CaO, and 5.0-11.3 wt% MgO.

EP1641717 discloses glass fibres with mechanical properties comparable with the ones of R-glass, as disclosed in FR1435073, and yielding enhanced processing properties, in particular, melting and fiberization conditions. The glass fibres proposed in EP1641717 comprise 50-65 wt% $SiO_2$, 12-20 wt% $Al_2O_3$, 12-17 wt% CaO, and 6-12 wt% MgO, with a combined amount of (MgO + $Al_2O_3$) preferably larger than 24 wt%.

W02009/138661 teaches that a glass fibre having a high modulus and a liquidus temperature of 1250°C or less can be obtained with a formulation comprising 50-65 wt% $SiO_2$, 12-23 wt% $Al_2O_3$, 1-10 wt% CaO, and 6-12 wt% MgO. The sum of $SiO_2$ and $Al_2O_3$ should be greater than 79 wt%.

W09840321 describes a glass fibre suitable for heat and sound insulation in the building industry comprising 50-60 wt% $SiO_2$, 1-6 wt% $Al_2O_3$, 16-22 wt% MgO, and 12-18 wt% CaO. The use of this glass, characterized by unusually high (MgO / $Al_2O_3$) ratios comprised between 3.64 and 12.4, as reinforcement for composite materials is not disclosed.

CA1045641 and US3892581 disclose glass fibres for composites reinforcement comprising 53-57.3 wt% $SiO_2$, 16.3-18.5 wt% $Al_2O_3$, 8.5-12.7 wt% CaO, and 6.6-10.5 wt% MgO. Similarly, W02006/0641 64 describes glass fibres for reinforcement of composite materials with a higher content of $Al_2O_3$ and CaO than the preceding compositions, and comprising 50.0-65.0 wt% $SiO_2$, 12.0-20.0 wt% $Al_2O_3$, 12.0-17.0 wt% CaO, and 6.0-1 2.0 wt% MgO. The corresponding (MgO / $Al_2O_3$) ratios are consequently lower than the preceding.

W02008/142347 discloses low cost glass fibre formulations providing excellent trade-off between mechanical properties and production conditions. They comprise rather low combined amounts of (MgO + $Al_2O_3$), with 62.0-72.0 wt% $SiO_2$, 4.0-11.0 wt% $Al_2O_3$, 8.0-22.0 wt% CaO, and 1.0-7.0 wt% MgO.

In spite of the extensive research done to date to develop glass fibre compositions with enhanced properties, there still is a need to find glass fibres combining high mechanical, physical and chemical properties with production cost effectiveness.

**Summary of the invention**

The present invention is defined in the appended independent claims. Preferred embodiments are defined in the dependent claims. The present invention provides a glass fibre of quaternary composition comprising $SiO_2$, $Al_2O_3$, CaO, and MgO as major components, characterized by:

- b - a $(MgO + Al_2O_3) \leq (MgO / Al_2O_3) \leq 3.6$, and
- $(MgO + Al_2O_3) < 40\%$,

wherein a = 0.0223 and b = 1.28.

In the context of the present invention, a "major component" should be understood as a component present in an amount of at least 5 wt% of the total weight of the composition. The compositions of the present invention are characterized by higher $(MgO / Al_2O_3)$ ratios as a function of $(MgO + Al_2O_3)$ contents, when compared with the compositions of the prior art.

The quaternary compositions of the present invention may comprise from 45 to 65 wt% $SiO_2$, and 5 to 20 wt% CaO. Preferably, the content of $(MgO + Al_2O_3) \geq 26$ wt% and/or $(MgO + Al_2O_3) \leq 38.0$ wt%. The content of MgO is preferably comprised between 11 and 23 wt%, and is preferably greater than 12 wt%, and even at least 15 wt%. In a preferred embodiment, the glass fibres of the present invention comprise:

- 7 wt% $\leq Al_2O_3) < 20$ wt%, and
- 12 wt% < MgO $\leq 22$ wt%.

Advantageously, the glass fibres of the present invention comprise at least 13 wt% of $Al_2O_3$, and preferably the combined content of $SiO_2 + Al_2O_3$ is less than 79 wt%. More preferably, the combined content of MgO + CaO is greater than 25 wt%. The presence of neither fluorine nor boron is necessary in the formulations of the present invention, and their absence is preferred to avoid the well known drawbacks associated with these components.

In a preferred embodiment, glass fibres according to the present invention are characterized by a:

- $SiO_2$ / (MgO + CaO) ratio comprised between 1.80 and 2.30, preferably between 1.8 and 2.28, more preferably between 1.84 and 2.28 and/or
- MgO / (MgO + CaO) ratio greater than 15%.

In another embodiment, the glass fibres are characterized by:

- $SiO_2$ / (MgO + CaO) ratio is comprised between 1.30 and 2.0, and/or
- $Al_2O_3$) / (MgO + CaO) ratio is comprised between 15 and 120%.

The present invention also concerns a composite material comprising an organic or inorganic matrix reinforced with glass fibres as described supra. The glass fibres of the present invention are particularly suitable for applications where high performance composites are needed, in particular in applications such as windmill blades, pressure vessels, components in the automotive, machinery, ballistics, and aerospace applications. In particular, windmill blades generally consist of a hollow shell or a skin-core structure, wherein the shell or skin are made of a polymeric material (e.g., thermoset resins such as epoxy or polyesters, or thermoplastic polymers such as PET, PP) reinforced by long, preferably continuous fibres. The present invention also concerns windmill blades and other products comprising a polymeric matrix reinforced with glass fibres as defined supra.

**Brief description of the Figures**

Figure 1: shows a plot of the $(MgO + Al_2O_3)$ vs $(MgO / Al_2O_3)$ of glass compositions according to the present invention compared with the glass fibre formulations of the prior art revised supra.

Figure 2: shows the mean Tlog3 values of glasses according to the present invention compared with values published in the prior art revised supra.

Figure 3: shows the mean specific modulus ($E_{sp}$) of glasses according to the present invention compared with values published in the prior art revised supra.

Figure 4: shows the specific modulus ($E_{sp}$) (A) as a function of the ratio (MgO / $Al_2O_3$) for a constant amount of (MgO + $Al_2O_3$), and (B) as a function of the (MgO + $Al_2O_3$) content.

## Detailed description of the invention

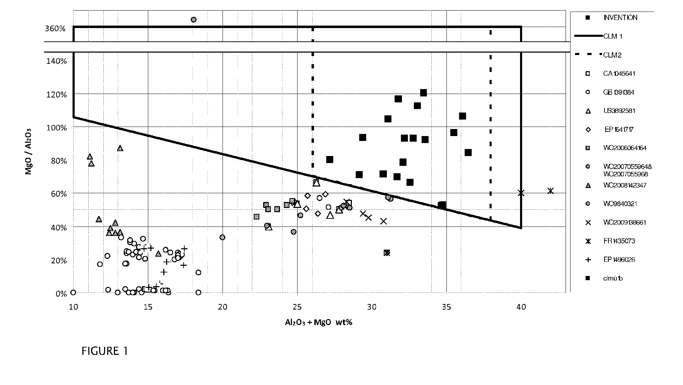

The glass fibre compositions of the present invention are defined as quaternary because they comprise at least 5 wt% of the following four components: $SiO_2$, $Al_2O_3$, CaO, and MgO. Consequently, the combined amount (MgO + $Al_2O_3$) according to the present invention is at least equal to 10 wt%, as illustrated graphically in Figure 1 by the thick, vertical solid line on the left hand side.

Silicia, $SiO_2$, as network forming oxide of glass, is the principal component of glass and is preferably present in an amount comprised between 45 and 65 wt%, more preferably between 47 and 59 wt%. Increasing the amount of $SiO_2$ generally increases the viscosity of the melt.

Alumina, $Al_2O_3$, is also a network forming oxide of glass and, according to the present invention, it is present, in combination with MgO, in an amount less than 40 wt% as depicted in Figure 1 by the vertical, thick solid line on the right hand side. Combined amounts of (MgO + $Al_2O_3$) exceeding 40 wt% were found to yield high liquidus temperatures, thus hindering spinnability as can be seen in FR1435073 with a liquidus temperature of 1350°C for a combined amount (MgO + $Al_2O_3$) of 40 to 42 wt%. According to the present invention, $Al_2O_3$ is preferably present in an amount of at least 7 wt% and less than 25 wt%, more preferably, less than 20 wt%. Higher amounts of alumina may be detrimental to the viscosity of the melt and increase the risks of devitrification. Preferably, the amount of $Al_2O_3$ is at least 13 wt% and, more preferably, the combined content of $SiO_2$ + $Al_2O_3$ is less than 79 wt%. This range of $Al_2O_3$ can be considered as intermediate when compared with the prior art and, in combination with MgO in the claimed combined amounts and ratios, it allows for a high modulus with low processing temperature and viscosity (Tlog3).

As mentioned supra, magnesia, MgO, according to the present invention is present, in combination with $Al_2O_3$, in an amount less than 40 wt% as depicted in Figure 1 by the vertical, thick solid line on the right hand side. The (MgO / $Al_2O_3$) ratio should not exceed 360% (see top horizontal thick solid line in Figure 1), as it was found to reduce the resistance to hydrolytic attack of the glass. The (MgO / $Al_2O_3$) ratio is, however, advantageously not greater than 300%, more advantageously not more than 200%, and most advantageously not more than 150%. Preferably; the glass compositions of the present invention comprise an amount of MgO greater than 12 wt% and not more than 22 wt%, preferably at most 20 wt%. It is preferably present in an amount greater than 13 wt%; more preferably greater than 15 wt%. Its presence in the claimed amounts contributes to a high tensile modulus, and counteracts the negative effects of $Al_2O_3$ on devitrification. It also allows control of viscosity.

Calcia, CaO, is present in an amount of at least 5 wt% as a major component of the claimed formulations. It is preferably present in an amount of not more than 20 wt%. CaO in these amounts permits to control the melt viscosity and devitrification. Too high amounts of CaO are reported as being detrimental to the tensile strength and modulus and to raise the liquidus temperature.

The gist of the present invention lies in the unique ratios of MgO to $Al_2O_3$, which are generally higher than the prior art glass fibre compositions for a corresponding combined amount of (MgO + $Al_2O_3$). Referring to Figure 1, it can be seen that the compositions according to the present invention all lie above the descending diagonal dividing in two an imaginary rectangular area defined by (MgO / $Al_2O_3$) = 0 to 128% time (MgO + $Al_2O_3$)= 0 to 54.9 wt%, whilst most of the formulations of the prior art lie below said diagonal. Said dividing diagonal can thus be defined as:

$$(MgO \: / \: Al_2O_3) = 1.28 - 0{,}023 \: (MgO + Al_2O_3). \qquad\qquad (1)$$

The glass compositions of the present invention are comprised within the area defined by the thick continuous line depicted in Figure 1 and define a totally novel type of glass fibre compositions yielding excellent mechanical properties, good durability, and cost effective processing conditions.

The glass fibres of the present invention may contain other oxides to fine tune the properties thereof. Typical examples of oxides that may enter into the composition of the present fibres are any oxide of the following elements: Li, Zn, Mn, Ce, V, Ti, Be, Sn, Ba, Zr, Sr, which may be present in an amount less than 5 wt%, typically of 0.05 to 3 wt%, preferably from 0.2 to 1.5, or 0.5 to 1.0 wt%. The glass fibres may further contain minor amounts (less than 1wt%) of alkaline oxides like $Na_2O$ and $K_2O$. $B_2O_3$ may also be present but its use is associated with well known drawbacks and is not preferred.

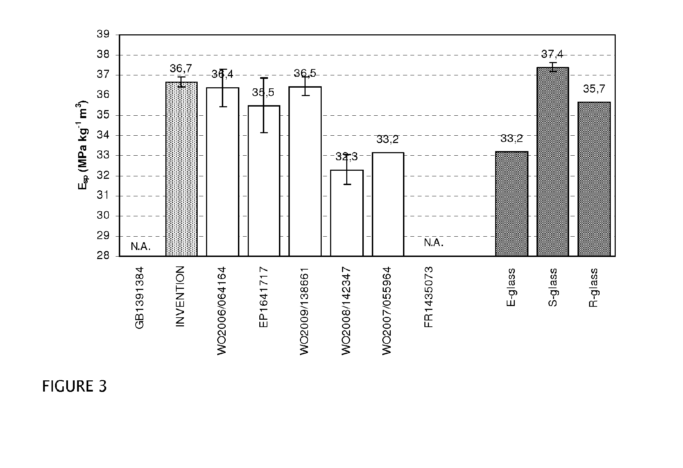

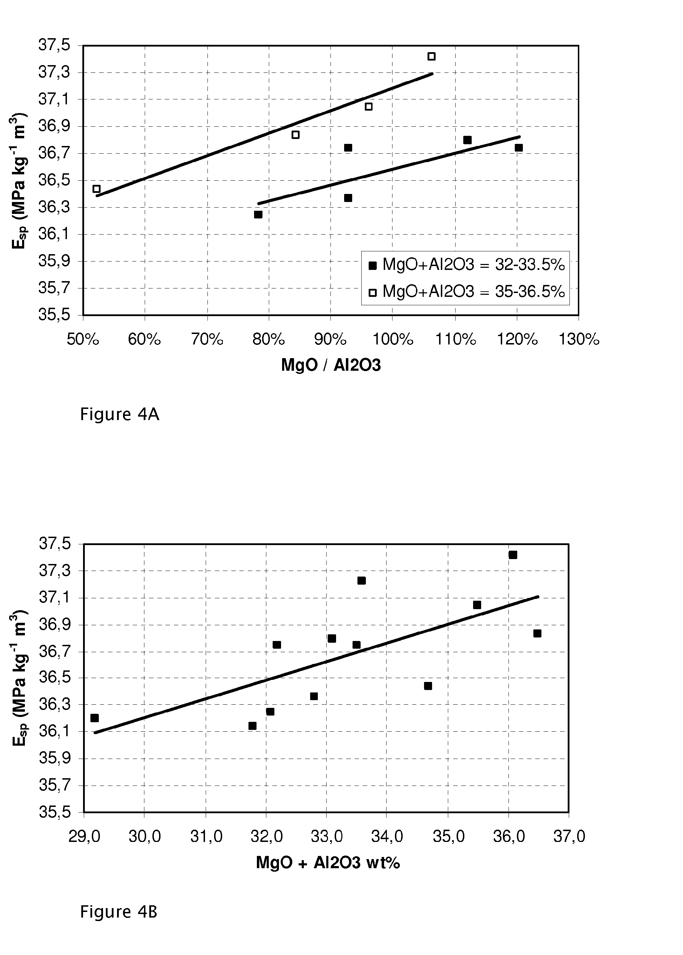

Table 1 lists the compositions of a number of glass fibres according to the present invention and represented in Figure 1 with black squares. Table 1 also lists the measured values of the bulk modulus which lie around 100 GPa, and of the specific modulus ($E_{sp}$ = $E_{bulk}$ / density) which range between 36.4 and 37.4 MPa kg$^{-3}$ m$^3$. Figure 3 compares the mean value of the specific modulus of the glass fibres according to the present invention with the ones of the prior art, showing the superior mechanical properties of the former, with specific moduli comparable with the ones of R- ansd S-glass. Figure 4A shows how increasing the (MgO / Al$_2$O$_3$) ratio for a given amount of (MgO + Al$_2$O$_3$) increases the specific stiffness of the glass. The specific glass stiffness also increases with increasing amounts of (MgO + Al$_2$O$_3$) as illustrated in Figure 4B.

Table 2 lists further formulations according to the present invention which are also plotted in Figure 1.

Table 1: Glass formulations according to the present invention (cf. black squares in Figure 1)

| # | SiO$_2$ Wt% | Al$_2$O$_3$ Wt% | MgO Wt% | CaO Wt% | MgO+Al$_2$O$_3$ Wt% | MgO/Al$_2$O$_3$ | ≥ | 1.28-0,023 x (MgO + Al$_2$O$_3$) | E$_{bulk}$ GPa | E$_{sp}$ MPa kg$^{-1}$ m$^3$ |
|---|---|---|---|---|---|---|---|---|---|---|
| 1 | 47,4 | 19,8 | 16,7 | 16,0 | 36,5 | 84% | > | 44% | 102,4 | 36,8 |
| 2 | 49,8 | 22,8 | 11,9 | 15,4 | 34,7 | 52% | > | 48% | 99,1 | 36,4 |
| 3 | 48,7 | 17,5 | 18,6 | 15,1 | 36,1 | 106% | > | 45% | 104,0 | 37,4 |
| 4 | 54,6 | 17,5 | 16,1 | 11,8 | 33,6 | 92% | > | 51 % | 100,5 | 37,2 |
| 5 | 55,1 | 18,0 | 14,1 | 12,8 | **32,1** | 78% | > | 54% | 97,5 | 36,2 |
| 6 | 56,5 | 18,1 | 17,4 | 7,9 | 35,5 | 96% | > | 46% | 98,9 | 37,0 |
| 7 | 58,1 | 14,7 | 17,1 | 10,1 | **31,8** | 116% | > | 55% | 96,5 | 36,1 |
| 8 | 57,9 | 17,0 | 15,8 | 9,2 | **32,8** | 93% | > | 53% | 96,0 | 36,4 |
| 9 | 58,2 | 15,2 | 18,3 | 8,3 | 33,5 | 120% | > | 51% | 98,1 | 36,7 |
| 10 | 58,9 | 16,7 | 15,5 | 8,8 | **32,2** | 93% | > | 54% | 97,0 | 36,7 |
| 11 | 60,2 | 15,6 | 17,5 | 6,6 | **33,1** | 112% | > | 52% | 96,4 | 36,8 |
| 12 | 61,7 | 17,1 | 12,1 | 9,0 | 29,2 | 71% | > | 61% | 93,4 | 36,2 |

Table 2: Glass formulations according to the present invention (cf. black squares in Figure 1)

| # | SiO$_2$ Wt% | Al$_2$O$_3$ Wt% | MgO Wt% | CaO Wt% | MgO+Al$_2$O$_3$ Wt% | MgO/Al$_2$O$_3$ | ≥ | 1.28-0,023 x (MgO + Al$_2$O$_3$) |
|---|---|---|---|---|---|---|---|---|
| 13 | 49,8 | 22,8 | 15,4 | 12,0 | 34,8 | 52,6% | > | 48,0% |
| 14 | 55,1 | 18,0 | 14,1 | 12,8 | 30,8 | 71,1 % | > | 57,2% |
| 15 | 58,5 | 18,7 | 9,8 | 13,0 | 31,7 | 69,5% | > | 55,1% |
| 16 | 62,8 | 15,1 | 10,0 | 12,1 | 27,2 | 80,1% | > | 65,4% |
| 17 | 55,1 | 19,6 | 12,3 | 13,0 | 32,6 | 66,3% | > | 53,0% |
| 18 | 57,7 | 15,2 | 12,9 | 14,2 | 29,4 | 93,4% | > | 60,4% |
| 19 | 58,8 | 15,2 | 10,1 | 15,9 | 31,1 | 104,6% | > | 56,5% |

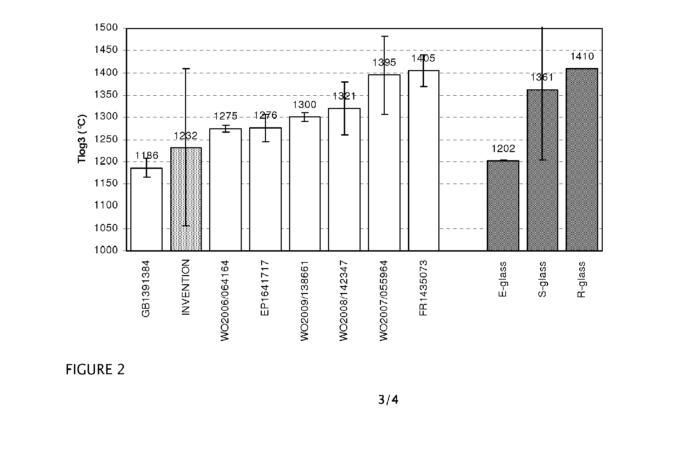

As can be seen in Figure 1, none of the glass fibres disclosed in the prior art comprises the claimed values of (MgO / Al$_2$O$_3$) ratios for the corresponding values of (MgO + Al$_2$O$_3$) comprised between 10 and less than 40 wt%. For example, the R-fibres disclosed in FR1435073 (*-stars in Figure 1) comprise high amounts of (MgO + Al$_2$O$_3$) and, in particular, high amounts of Al$_2$O$_3$, which were found detrimental to processing conditions, with liquidus temperatures of up to 1350°C and a mean value of the temperature of the melt corresponding to a viscosity of 10$^3$ poise (= Tlog3) of about 1405°C reported therein (cf. Figure 2). Although an Al$_2$O$_3$ amount ranging from 20 to 30 wt% and an MgO amount of 5 to 20 wt% are claimed, the preferred ranges are 24 to 26 wt% Al$_2$O$_3$, and 6 to 16 wt% MgO, as confirmed by the examples all comprising 25 to 26 wt% Al$_2$O$_3$. In our opinion, such high amounts of Al$_2$O$_3$, even when combined with high amounts of MgO, increase the risk of devitrification and are detrimental to the viscosity of the melt and fiberization conditions which, together with the high processing temperature (Tlog3), impact on the production costs. The fibres of the present invention avoid these drawbacks by restricting the combined amount of ($MgO + Al_2O_3$) to less than 40 wt%, preferably less than 38 wt%.

EP1641717 (white diamond in Figure 1) proposes a glass fibre composition maintaining the good mechanical properties of the R-glass fibres disclosed on FR143073, with substantially lower amounts of $Al_2O_3$ (12 to 20 wt%) than the latter, but concomitantly, the authors of EP1641717 also restricted the amount of MgO to 6-12 wt%, corresponding to the selection of a low fraction of the range 5-20 wt% MgO present in R-glass. The preferred range of MgO content according to EP1641717 is between 8 and 10 wt%, and none of the examples disclosed therein comprises more than 10 wt% MgO, yielding considerably lower values of the ($MgO / Al_2O_3$) ratios for a given ($MgO + Al_2O_3$) combined amount than the present invention, as can be clearly seen in Figure 1. The Tlog3 values of these glasses are comparable with, albeit slightly higher than, the ones measured on the glasses according to the present invention (cf. Figure 2).

Later, one of the inventors of the preceding application discloses in WO2009/1 38661 (X-crosses in Figure 1) an improvement over the fibres disclosed in EP1641717 with glass fibres comprising slightly higher amounts of $Al_2O_3$ (12 to 23 wt%) but confirming his initial selection of 6 to 12 wt% MgO. The glass of WO2009/138661 has a specific modulus comparable with the one of the glass of the present invention, which is higher than the one of the preceding document (cf. Figure 3). It has, however, a higher mean value of Tlog3 than the one of the preceding patent application (cf. Figure 2). In combination with the earlier publication (white diamonds in Figure 1), the author of WO2009/138661 seems to follow a trend substantially parallel to, albeit clearly lower than the line defined by Equation (1) which constitutes the lower boundary of the claimed invention (cf. Figure 1: compare the combination of white diamonds and X-crosses with the diagonal thick solid line). Surprisingly, it has been found that by increasing the amount of MgO with respect to $Al_2O_3$ for a given amount of ($MgO + Al_2O_3$) to above the line defined by Equation (1) glass fibres with excellent properties and low processing temperatures (Tlog3) can be produced.

Similarly, the fibres disclosed in WO2007/055964 and WO2007/055968 (grey circles in Figure 1) contain 20 to 31.3 wt% of ($MgO + Al_2O_3$) with ratios ($MgO / Al_2O_3$) ranging from 33 to 57%, with 9 out of 12 examples having a rather low ratio of at most 52%. As can be seen in Figure 2, however, the temperature of the melt corresponding to a viscosity of $10^3$ poise (= Tlog3) of the glass fibre formulations disclosed in these documents is quite high with a mean value of 1395°C, about 160°C higher than the mean value of Tlog3 measured on the formulations according to the present invention (cf. Figure 2). These substantially higher processing temperatures are detrimental to the economics of the fibres disclosed in WO2007/055964 and WO2007/055968 compared with the fibres according to the present invention. The specific modulus of these glasses is of the order of the one of E-glass and therefore considerably lower than the one of the glass of the present invention (cf. Figrue 3).

GB1391384 (white circles) discloses glass compositions comprising a wide variation in ($MgO + Al_2O_3$) ranging from ca 10 to 27 wt% with, however, significantly lower corresponding values of ($MgO / Al_2O_3$) ratio than according to the present invention (cf. Figure 1). The Tlog3 of the glasses disclosed in this document are quite low, with a mean value lower than 1200°C, but there is no mechanical data disclosed therein.

As revised in the background section, CA1045641 (white squares in Figure 1) and US3892581 (white triangles) disclose glass fibres for composites reinforcement comprising 16.3-18.5 wt% $Al_2O_3$ and 6.6-1 0.5 wt% MgO, with examples characterized by ($MgO + Al_2O_3$) amounts of the order of 23-28 wt% and ($MgO / Al_2O_3$) ratios of not more than 66%. The inventor of US3892581 stresses that "the combination of the components at the levels designated impart the necessary properties to the glass fibers formed therefrom", thus clearly indicating that higher amounts and proportions of MgO and $Al_2O_3$ are not desirable.

The glass fibres disclosed in WO2008/142347 (grey triangles in Figure 1) have rather low amounts of ($MgO + Al_2O_3$), all less than 15 wt% but with a rather high proportion of MgO over $Al_2O_3$, with a ($MgO / Al_2O_3$) of up to 87% (cf. Ex.1 of WO2008/142347). Referring to Equation (1) supra, a composition according to the present invention, comprising the same amount of ($MgO + Al_2O_3$) as Ex.1 of WO2008/142347, is characterized by a ($MgO / Al_2O_3$) ratio of at least 99%, which is substantially higher than 87%. The mean value of Tlog3 of the formulations disclosed in WO2008/142347 is 1321°C, which is about 90°C higher than the mean value measured on the glass formulations according to the present invention (cf. Figure 2 and Table 1). The specific modulus of the glass disclosed in this document is even lower than the one of E-glass and these fibres are therefore not the most suitable ones for applications where high stiffness and low weight are desired (cf. Figure 3).

WO2006/0641 64 (grey squares in Figure 1) discloses several formulations with combined amounts of ($MgO + Al_2O_3$) ranging from 15 to 31 wt%, but with ratios ($MgO / Al_2O_3$) all lying well below the claimed lower boundary defined by Equation (1) supra.

Contrary to the conservative trend observed in the prior art as revealed supra, a totally novel and unexplored area of glass fibre formulations characterized by a substantially higher amount of MgO with respect to $Al_2O_3$ for a given amount of ($MgO + Al_2O_3$) has shown to yield excellent mechanical properties with exceptionally low Tlog3 values (cf. Figures 2 and 3). The higher ($MgO / Al_2O_3$) ratios according to the present invention require higher amounts of MgO than generally used, with MgO amounts of at least 12 wt% being preferred, more preferably at least 13 wt% and even at least 15 wt%.

In yet another embodiment of the present invention, the combined content of (MgO + CaO) is greater than 25 wt%. This has been found to enhance stiffness and lower Tlog3 and liquidus temperatures. A content of $Al_2O_3$ of at least 13 wt% is preferred, but the combined content of $SiO_2 + Al_2O_3$ is preferably less than 79 wt%. It was found that, contrary to what was taught in WO2009/138661, glasses with a combined amount of $SiO_2 + Al_2O_3$ lower than 79 wt% yielded very good properties. Preferably, this amount is at least 65 wt%, more preferably, at least 66 wt%, and most preferably, it is comprised between 66 and 75 wt%.

In view of their high stiffness (cf. Table 1) the glass fibres of the present invention are particularly suitable for use as reinforcement in composite materials with an organic or inorganic matrix. The reinforcement fibres can be present as continuous yarns or short fibres. In view of the high performance of the present fibres, they are preferably used as continuous yarns in so called advanced composite materials. These can be used as unidirectional filaments, like in filament winding, particularly suitable for the production of pressure vessels, or can be woven, braided, or knitted to form a series of 2-D or 3-D reinforcement preforms well known to the persons skilled in the art.

The composite materials produced with the glass fibres of the present invention may have an inorganic matrix, but composite materials with an organic matrix are particularly preferred. In particular, the fibres of the present invention may be used with thermoset resins, thermoplastic polymers, or elastomers alike. In the case of thermoset resins, the fibres may be impregnated in the composite forming tool (e.g., RTM, sheet moulding, or filament winding) or pre-impregnated forming a prepreg or a tow-preg. For thermoplastic polymers, direct impregnation of dry fibres is probleamtic because of the generally high viscosity of thermoplastic melts, and a solvent is then required to lower the viscosity. But solvent extraction after formation is time and energy consuming and raises serious environmental concerns. It is preferred to produce tow-pregs wherein the glass fibres are intimately mingled with the thermoplastic matrix present either as a powder or as filaments. As is the case with glass-thermoset prepregs, the glass-thermoplastic towpregs are impregnated and consolidated in a tool under elevated temperature and pressure. Unlike the thermoset composites, the thermoplastic matrix must be cooled below its melting temperature prior to extracting the composite part from the tool.

Composite materials reinforced with the fibres of the present invention can advantageously be used for the manufacturing of a number of advanced engineering parts, such as panels in the automotive and aerospace industries, pressure vessels, and windmill blades.

Panels or more intricate functional parts in e.g., the automotive and aerospace industries may be produced by any processing technique known in the art, such as resin transfer moulding (RTM), compression moulding, vacuum bagging, autoclave forming, filament winding, etc. Pressure vessels can advantageously be produced by filament winding. Alternatively, they can be produced by laying the fibres, e.g., as a braided or knitted preform on an inflatable bladder and the whole system is then placed into a closed tool defining a cavity. Resin is either injected if the fibres are dry, or in case of prepregs or tow-pregs, the temperature is raised and the bladder inflated to press the fibres and matrix against the inner walls of the tool defining the cavity to drive impregnation of the fibres.

Windmill blades may be produced by winding roving tapes or roving bundles around a core or mandrel, as disclosed e.g., in US4242160 and US4381960. They can also be manufactured by joining two half-shells produced e.g., by compression moulding, vacuum bagging, autoclave forming, or stamping prepregs. The joining is generally carried out with an adhesive which is critical and may constitute a weak part of the blade. Depending on the matrix, resin curing may advantageously be carried out by exposure to UV radiation or heat. In case of thermoplastic polymers, the temperature cycle includes heating above and cooling below the melting temperature prior, respectively, after the fibre impregnation stage. Windmill blades may also be produced by RTM, the blades comprising a foam core or the tool being designed with a removable core (cf. e.g., US2003116262).

**Claims**

1. Glass fibre of quaternary composition comprising $SiO_2$, $Al_2O_3$, CaO, and MgO as major components, **characterized by**:

   - b - a $(MgO + Al_2O_3) \leq (MgO / Al_2O_3) \leq 3.6$, and
   - $(MgO + Al_2O_3) < 40\%$,

   wherein a = 0.0223 and b = 1.28.
   [cf. thick solid black trapezoidal outline in Figure 1]

2. Glass fibre according to claim 1 wherein $(MgO + Al_2O_3) \geq 26$ wt% and/or $(MgO + Al_2O_3) \leq 38.0$ wt%.
   [cf. thick dotted black trapezoidal outline in Figure 1]

**3.** Glass fibre according to claim 1 or 2 comprising 45 to 65 wt% $SiO_2$, 7 to 25 wt% $Al_2O_3$, 5 to 20 wt% CaO, and 8 to 25 wt% MgO, and preferably the content of (MgO + CaO is greater than 25 wt%.
*[to further define the quaternary system and to further distinguish from the teachings of D32. It does not depend on claim 2 because its scope is not included in the latter's]*

**4.** Glass fibre according to any of the preceding claims, wherein the content of MgO is comprised between 11 and 23 wt%, and is preferably greater than 12 wt%, most preferably at least 13 or at least 15 wt%.

**5.** Glass fibre according to to any of the preceding claims wherein,:

• 7 wt% $\leq Al_2O_3$ < 20 wt%, and
• 12 wt% < MgO $\leq$ 22 wt%, preferably, Mg0 $\leq$ 20 wt%

*[= claim 1 of OPT1, which is novel with respect to the ranges claimed in PA, which is not the case of present claim 1 if expressed in terms of MgO = f(Al203)]*

**6.** Glass fibre according to any of the preceding claims wherein the content of $Al_2O_3$ is between 13 wt% and less than 20 wt%.
*[to further distinguish from the prior art, in particulr D32, including part of the claims in OPTION 1]*

**7.** Glass fibre according to any of the preceding claims wherein:

• $SiO_2$ / (MgO + CaO) ratio is comprised between 1.80 and 2.30, preferably between 1.8 and 2.28, more preferably between 1.84 and 2.28 and/or
• MgO / (MgO + CaO) ratio is greater than 15%.

*[to further distinguish from the prior art including claim 1A of OPTION 2A]*

**8.** Glass fibre according to any of claims 1 to 5, wherein:

• $SiO_2$ / (MgO + CaO) ratio is comprised between 1.30 and 2.0, and/or
• $Al_2O_3$ / (MgO + CaO) ratio is comprised between 15 and 120%.

*[to further distinguish from the prior art including claim 1B of OPTION 2B]*

**9.** Glass fibre according to any of the preceding claims comprising substantially no boron oxide.
*[to further distinguish from the teaching of D6]*

**10.** Composite material comprising an organic or inorganic matrix reinforced with glass fibres according to any of the preceding claims.

**11.** Use of glass fibres according to any of claims 1 to 9 as reinforcement for the manufacturing of windmill blades, pressure vessels, or parts in the fields of automotive, aeronautics, or ballistics.

**12.** Windmill blade comprising a skin or shell made of a composite material reinforced with glass fibres according to any of claims 1 to 9.

**13.** Pressure vessel made of a composite material reinforced with glass fibres according to any of claims 1 to 9.

**14.** Product in the fields of automotive, aeronautics, or ballistics made of a composite material reinforced with glass fibres according to any of claims 1 to 9.

FIGURE 1

FIGURE 2

FIGURE 3

Figure 4A

Figure 4B

Europäisches
Patentamt

European
Patent Office

Office européen
des brevets

**EUROPEAN SEARCH REPORT**

Application Number

EP 10 15 2818

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 520 246 A (MIJ EXPLOITATIE OCTROOIEN NV) 18 April 1940 (1940-04-18) * examples d, f * | 1-14 | INV. C03C13/00 |
| X,D | FR 1 435 073 A (VERRE TEXTILE SOC DU [FR]) 15 April 1966 (1966-04-15) * example 3 * * page 2, left-hand column * | 1-4,7-14 | |
| A | DATABASE SciGlass 1981, A. A. Lisenenkov: XP007913430 Database accession no. 3421 * abstract; examples 142700 , 1427001 * -& A. A. LISENENKOV: FIZIKA I KHIMIYA STEKLA, vol. 7, no. 5, 1981, pages 584-594, XP008123240 * page 587; table 3 * | 1-14 | |
| A | DATABASE SciGlass 1954, E. F. Osborn et al.: XP007913436 Database accession no. 16452 * abstract; example 158354 * -& E. F. OSBORN ET AL.: "Optimum composition of blast furnace slag as deduced from liquidus data for the quaternary system CaO-MgO-Al2O3-SiO2" JOURNAL OF METALS, vol. 6, 1954, pages 33-45, XP008123287 * page 36; example P67 * | 1-14 | TECHNICAL FIELDS SEARCHED (IPC) C03C |

-/--

The present search report has been drawn up for all claims

| Place of search | Date of completion of the search | Examiner |
|---|---|---|
| The Hague | 12 August 2010 | Flügel, Alexander |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................................

& : member of the same patent family, corresponding
document

EPO FORM 1503 03.82 (P04C01)

Europäisches
Patentamt

European
Patent Office

Office européen
des brevets

**EUROPEAN SEARCH REPORT**

**Application Number**

EP 10 15 2818

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DATABASE SciGlass 1915, O. Andersen: XP007913437 Database accession no. 16999 * abstract; example 172963 * -& O. ANDERSEN: "The system Anorthite-Forsterite-Silica" AMERICAN JOURNAL OF SCIENCE - FOURTH SERIES, vol. 39, no. 232, 1915, page 407, XP008123241 * page 413; examples "54 An, 30 Fo, 16 SiO2"; table 4 * ----- | 1-14 | |

TECHNICAL FIELDS
SEARCHED     (IPC)

The present search report has been drawn up for all claims

| Place of search | Date of completion of the search | Examiner |
|---|---|---|
| The Hague | 12 August 2010 | Flügel, Alexander |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 10 15 2818

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2010

| Patent document cited in search report | | Publication date | Patent family member(s) | | Publication date |
|---|---|---|---|---|---|
| GB 520246 | A | 18-04-1940 | AU | 124553 A | |
| | | | BE | 430668 A | |
| | | | FR | 844874 A | 03-08-1939 |
| | | | GB | 520247 A | 18-04-1940 |
| | | | NL | 54041 C | |
| FR 1435073 | A | 15-04-1966 | DE | 1596751 A1 | 06-05-1970 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 1435073
- US 5789329 A
- EP 1496026 A
- GB 1391384 A
- WO 2007055964 A
- WO 2007055968 A
- EP 1641717 A
- WO 2009138661 A
- WO 9840321 A
- CA 1045641
- US 3892581 A
- WO 2006064164 A
- WO 2008142347 A
- FR 143073
- US 4242160 A
- US 4381960 A
- US 2003116262 A